# EUROPÄISCHE PATENTSCHRIFT

(11) **EP 2 817 549 B1**
(45) Veröffentlichungstag und Bekanntmachung des Hinweises auf die Patenterteilung: **27.04.2016**
(21) Anmeldenummer: 13708662.5
(22) Anmeldetag: 14.02.2013
(51) Int. Cl.: F16L 37/10, F16L 49/06

(54) **BAUTEILVERBINDER ZUM VERBINDEN VON ZYLINDRISCHEN BAUTEILEN**
COMPONENT CONNECTOR FOR CONNECTING CYLINDRICAL COMPONENTS
RACCORD D'ASSEMBLAGE DE PIÈCES CYLINDRIQUES

(30) Priorität: 25.02.2012 DE 102012003817
(43) Veröffentlichungstag der Anmeldung: 31.12.2014
(73) Patentinhaber: Arnold Jäger Holding GmbH, 30625 Hannover (DE)
(72) Erfinder: BACHMANN, Hans-Peter, 37534 Eisdorf (DE); BABEL, Stefan, 90522 Oberasbach (DE)
(74) Vertreter: Bremer, Ulrich
(86) Internationale Anmeldenummer: PCT/DE2013/100057
(87) Internationale Veröffentlichungsnummer: WO 2013/123935

(56) Entgegenhaltungen:
- EP-A1- 1 217 285
- DE-A1- 1 952 286
- DE-A1- 2 809 108
- US-A- 1 477 440
- US-A- 4 632 437
- US-B1- 7 543 858

## Beschreibung

Die Erfindung betrifft einen Bauteilverbinder zum Verbinden von zylindrischen Bauteilen, insbesondere von Rohren.

### Stand der Technik

Aus dem Stand der Technik sind Bauteil- bzw. Rohrverbinder bereits bekannt. Sie dienen dazu zwei Rohre, in denen z.B. ein Gas oder eine Flüssigkeit geführt werden kann, fest zu verbinden, so dass das Gas oder die Flüssigkeit durch die verbundenen Rohre strömen kann.

Dazu ist im Gebrauchsmuster DE 299 08 172 U1 eine Anordnung zum Herstellen langdimensionierter Kanäle vorgesehen, wobei zwei zu verbindende Bauelemente mit ihren Stirnseiten zusammenstoßen und in einer zentrischen Lage fixiert werden. Dabei werden zunächst die Stirnseiten mit einem Haftmittel spaltabdichtend verbunden. Als Haftmittel wird ein Kleber verwendet, der durch eine thermische Beeinflussung aushärtet. Nach dem Aushärten wird die Verbindungsstelle mit einer Fixierummantelung gleichmäßig nach beiden Seiten überdeckt, wodurch die Bauelemente axial und radial genau zueinander fixiert werden.

Weiterhin wird in der Offenlegungsschrift DE 2 145 831 eine Rohrverbindung für zwei Rohre aus thermoplastischem Kunststoff offenbart, die mit ihren Stirnflächen gegeneinander gesetzt sind. Vorgesehen ist dafür eine Manschette aus thermoplastischem oder thermoelastischem Kunststoffband, die im Bereich einer Stoßnaht auf die Rohrenden aufgewickelt wird und durch Schrumpfkräfte auf die Rohre gespannt wird. Zur Abdichtung ist weiterhin ein Dichtring vorgesehen, der ebenfalls durch die Manschette festgehalten und aufgespannt wird.

Nachteilig bei diesen Lösungen ist es, dass die Verbindungen nur sehr schwer wieder zu öffnen sind. Zum einen sind aufgespannte Ummantelungen z.B. aus thermoplastischem oder thermoelastischem Kunststoff nur aufwendig entfernbar und zum anderen ist ein ausgehärteter Kleber auf den Stirnflächen nicht einfach zu lösen, ohne dass auch die verbundenen Bauteile beschädigt werden.

Außerdem ist die Ummantelung leicht von außen zugänglich und kann somit im aufgespannten Zustand, aber auch beim Befestigen beschädigt werden. Eine Beschädigung der Ummantelungen wirkt sich dabei vor allem auf die Dichtheit und die Zuverlässigkeit der Verbindung aus. Dadurch sind ein Auslaufen einer Flüssigkeit oder ein Austreten eines Gases und ein Verrutschen der Rohre nicht zuverlässig verhinderbar. Ein schnelles Öffnen und Schließen der Bauteilverbindung sowie eine häufige Anwendung des gleichen Bauteilverbinders oder Bauteils können daher nicht gewährleistet werden.

In der US 4,632,437 ist ein Rohrverbinder offenbart, wobei eine Fixierhülse vorgesehen ist, auf der Vorsprünge angeordnet sind. Die Vorsprünge sind dabei integraler Bestandteil der Fixierhülse und auf den Vorsprüngen ist eine Oberflächenprofilierung in Form von Rastelementen angeordnet. Weiterhin ist ein zylindrischer Spannring vorgesehen, der die Fixierhülse mit den Vorsprüngen umgibt und dessen Innenwandung ebenfalls eine Oberflächenprofilierung aufweist, so dass der Spannring konzentrisch auf die Vorsprünge der Fixierhülse passgenau aufschiebbar ist. Durch eine Verdrehung des Spannrings wird die Fixierhülse zusammengedrückt und daran angeordnete Zähne werden dadurch in ein an der Fixierhülse angeordnetes Bauteil gedrückt, das dadurch fixiert wird. Eine Abdichtung der Bauteile wird durch zusätzliche O-Ringe erreicht, die zwischen Bauteil und dem Rohrverbinder vorgesehen sind. Am Rohrverbinder sind an beiden Seiten jeweils eine solche Fixierhülse und ein solcher Spannring angeordnet, so dass zwei Bauteile miteinander verbunden werden können.

Aus der EP 1 217 285 A1 ist ein Verbinder zum Verbinden von zwei zylindrischen Bauteilen bekannt, bei dem ein elastischer Dichtungsring die Bauteile im Bereich der Stoßnaht umschließt. Der elastische Dichtungsring wird von einem radial verformbaren Innenring und einem auf diesen passgenau aufschiebbaren Außenring umhüllt, wobei der Innenring eine profilierte Außenwandung und der Außenring eine gegensätzlich profilierte Innenwandung derart aufweisen, dass bei einer Drehung des Außenrings relativ zum Innenring in eine Schließrichtung der Innenring durch die Oberflächenprofilierung radial nach innen verformbar ist, und damit den Dichtungsring zur Fixierung und Abdichtung der Bauteile an der Stoßnaht verspannt.

Es ist daher Aufgabe der Erfindung, einen Bauteilverbinder, insbesondere zur Verbindung von Rohren zu schaffen, der mit wenig Bauteilen ein schnelles und sicheres Verbinden und eine abdichtende Wirkung ermöglicht und ein ungewolltes Verdrehen des Spannrings gegenüber der Fixierhülse zuverlässig verhindert.

Mit dem erfindungsgemäßen Bauteilverbinder wird eine Bauteilverbindung dadurch erreicht, dass Stirnflächen der zu verbindenden zylindrischen Bauteile, vorzugsweise zylindrische Bauteile mit gleichem Durchmesser, aneinander gesetzt und durch einen Kraftschluß zwischen Bauteilverbinder und Bauteil in dieser Position gehalten werden. Die zylindrischen Bauteile sind dabei fluchtend zueinander angeordnet. Der Bauteilverbinder kann aber auch so ausgeführt werden, dass Bauteile mit unterschiedlichem Durchmesser und in einem Winkel zueinander verbunden werden können.

Der Bauteilverbinder weist eine elastische Hülse auf, die in einem Bereich einer Stoßnaht die Bauteile umschließt. Als Stoßnaht wird dabei eine Verbindungsstelle der aneinander gesetzten Stirnflächen der zylindrischen Bauteile verstanden. Die elastische Hülse überdeckt einen so großen Bereich der Bauteile, dass eine Fixierung und Abdichtung der Stoßnaht gewährleistet ist.

Es ist weiterhin eine Fixierhülse vorgesehen, die die elastische Hülse umhüllt. Die Fixierhülse ist insbesondere in radialer Richtung, d. h. in eine Richtung senkrecht zu ihrer Längsachse, verformbar. Durch eine radiale Verformung der Fixierhülse wird die darunter liegende elastische Hülse ebenfalls verspannt, da eine Innenwandung der Fixierhülse auf eine Außenwandung der elastischen Hülse drückt.

Diese Verspannung der elastischen Hülse bewirkt einen Kraftschluß zwischen den Bauteilen und der darauf liegenden elastischen Hülse. Dadurch werden die Bauteile zum eine fixiert und zum anderen abgedichtet, da ab einer bestimmten Verspannung die elastische Hülse so stark an die Bauteile gedrückt wird, dass ein in den Bauteilen geführtes Fluid nicht durch die Stoßnaht und anschließend zwischen den Bauteilen und der elastischen Hülse in die Umgebung entweichen kann.
Die Außenwandung der Fixierhülse weist erfindungsgemäß zwei Flächenbereiche auf, die sich jeweils von der Verbindungsstelle der beiden Bauteile weg erstrecken und gegenläufige Oberflächenprofilierungen in Form von mindestens zwei in Umfangsrichtung gleichgerichteten Keilflächen besitzen. Jedem der Flächenbereiche ist ein Spannring zugeordnet, dessen Innenwandung mindesten zwei in Umlaufrichtung gleichgerichtete Keilflächen aufweist, die die gleiche Steigung wie die Keilflächen der Fixierhülse haben, jedoch gegenläufig angeordnet sind. wobei. Beim Verdrehen der Spannringe auf der Fixierhülse in Schließrichtung schieben sich die Keilflächen unter radialem Druckaufbau auf die zugeordneten Flächenbereiche aufeinander, und die erreichte Schließstellung wird durch auf den Keilflächen vorgesehene Raststufen arretiert, wodurch eine Verdrehung entgegen der Schließrichtung verhindert wird.

Die Bauteile sind also durch eine Verdrehung der Spannringe in die Schließrichtung fixierbar, da die Fixierhülse dabei verformt und die elastische Hülse somit gegen die Bauteile gedrückt wird. Durch die Raststufen werden die Spannringe bei einer erreichten Schließstellung arretiert und die Bauteile werden somit fixiert. Zum Lösen der Fixierung werden die Spannringe so lange in die Schließrichtung "überdreht", bis die anfängliche Relativverdrehung wieder erreicht ist und die beiden profilierten Wandungen auf dem gesamten Umfang passgenau aufeinander liegen. Die Fixierung ist aber auch dadurch lösbar, dass die Spannringe im verspannten Zustand der Fixierhülse in Achsrichtung von der Fixierhülse abgezogen wird und die Fixierhülse dadurch in ihren unverformten Zustand zurückgeht.

Daraus ergeben sich mehrere Vorteile:

Durch den erfindungsgemäßen Aufbau des Bauteilverbinders ist eine schnelle Montage möglich, da die Bauteile leicht in den geöffneten Bauteilverbinder gesteckt werden können. Insbesondere können auch unterschiedliche Bauteilformen mit zylindrischen Endstücken verbunden werden, wodurch der Verbinder sehr variabel einsetzbar ist.

Eine Verdrehung der Spannringe ermöglicht weiterhin eine sehr schnelle und einfache Fixierung der Bauteile, die gleichzeitig beim Verschließen durch die elastische Hülse ausgerichtet werden. Klebstoffe oder eine Wärmebehandlung zum Abdichten sind nicht nötig. Die Verbindung ist auch sehr einfach wieder lösbar und der Bauteilverbinder sowie die Bauteile werden dabei nicht beschädigt, wodurch der Aufwand und die Kosten gering gehalten werden, da beide Komponenten wiederverwendbar sind.

Weiterhin ist die elastische Hülse und somit der abdichtende Teil des Verbinders durch die Fixierhülse und die Spannringe vor Beschädigungen von außen geschützt. Von außen wirkende Kräfte beschädigen immer erst die robusten Komponenten, wodurch eine zuverlässige Fixierung und Abdichtung gewährleistet wird. Bei Beschädigung eines einzelnen Teils muss außerdem nicht der gesamte Bauteilverbinder ausgetauscht werden, vielmehr muss z.B. bei Beschädigung der elastischen Hülse lediglich diese ersetzt werden. Dadurch werden Materialkosten gespart.

Die Erfindung wird im Folgenden anhand von Ausführungsbeispielen näher erläutert. Dabei zeigen:
- Fig. 1: zwei Rohre, die durch einen erfindungsgemäßen Bauteilverbinder verbunden sind,
- Fig. 2: eine perspektivische Ansicht einer elastischen Hülse des Bauteilverbinders,
- Fig. 3: eine perspektivische Ansicht einer Fixierhülse des Bauteilverbinders,
- Fig. 4: eine Stirnansicht der Fixierhülse in Blickrichtung der Pfeile A und B gemäß Fig. 3.
- Fig. 4a: eine Einzelheit C gemäß Fig. 4 in vergrößerter Darstellung,
- Fig. 5: eine Seitenansicht der Fixerhülse des Bauteilverbinders,
- Fig. 6: eine Stirnansicht eines Spannringes des Bauteilverbinders,
- Fig. 6a: eine Einzelheit D gemäß Fig. 6 in vergrößerter Darstellung,
- Fig. 7: eine Seitenansicht des Spannringes des Bauteilverbinders,
- Fig. 8: eine perspektivische Ansicht des erfindungsgemäßen Bauteilverbinders im zusammengebauten Zustand,
- Fig. 9: eine Stirnansicht des erfindungsgemäßen Bauteilverbinders im zusammengebauten Zustand und
- Fig. 9a: eine Einzelheit E gemäß Fig. 9 in vergrößerter Darstellung.

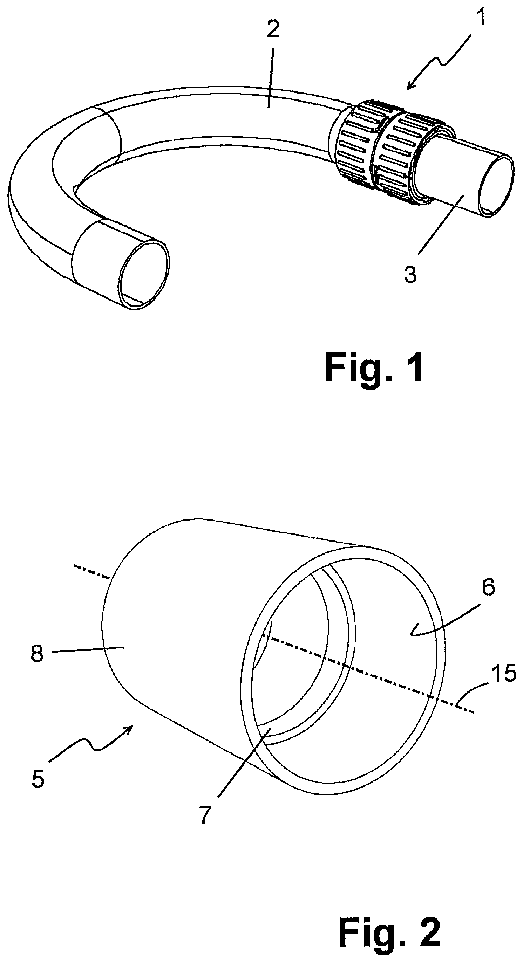

Die Fig. 1 zeigt eine perspektivische Ansicht eines Bauteilverbinders 1, der zwei Rohre 2 und 3 verbindet. Einzelne Komponenten des Bauteilverbinders 1 werden im Folgenden anhand der Figuren 2 bis 7 näher erläutert.

Fig. 2 zeigt eine elastische Hülse 5, die ein Innenteil des Bauteilverbinders 1 bildet. Die elastische Hülse 5 weist eine Hohlzylinderform auf, wobei eine Innenwandung 6 der Hülse 5 im montierten Zustand auf den zu verbindenden Rohren 2,3 aufliegt. Vorzugsweise besteht die elastische Hülse 5 aus einem Kunststoff oder einem Elastomer, wodurch die elastische Hülse 5 verformbar ist.

Auf der Innenwandung 6 der elastischen Hülse 5 ist ein umlaufender Steg 7 vorgesehen, der in etwa mittig angeordnet ist. Die Höhe des Stegs 7 entspricht in etwa der Dicke einer Wandung der zu verbindenden Rohre 2,3, damit ein in den Rohren 2,3 geführtes Fluid durch den Steg 7 in seiner Strömung nicht behindert wird. Der Steg 7 kann ein Teil der elastischen Hülse 5, aber auch auf die Innenwandung 6 der elastischen Hülse 5 aufgeklebt sein. Der umlaufende Steg 7 soll insbesondere beim Verbinden von Glasrohren verhindern, dass deren Stirnflächen aneinander liegen, da es dadurch zu ungewollten Beschädigungen der Stirnflächen kommen kann, wenn sich die Glasrohre gegeneinander bewegen. Weiterhin werden durch den Steg 7 auch die Stirnflächen der Rohre 2,3 abgedichtet, was die Abdichtung insgesamt verbessert.

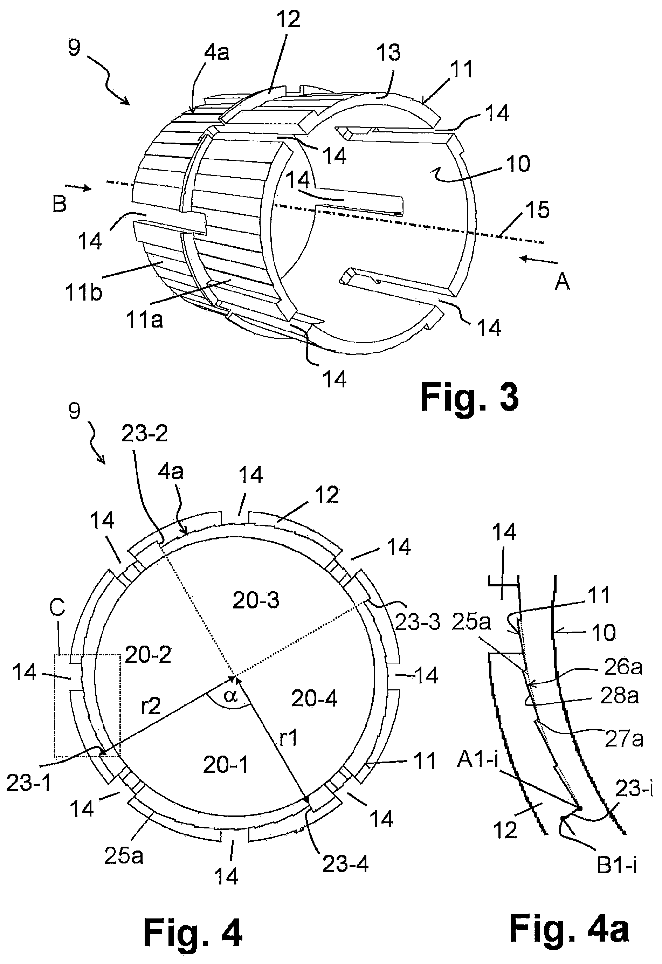

Fig. 3 bis 5 zeigen eine Fixierhülse 9 des Bauteilverbinders 1. Wie auch die elastische Hülse 5 ist die Fixierhülse 9 als ein Hohlzylinder ausgeführt, dessen glatte Innenwandung 10 passgenau auf eine Außenwandung 8 der elastischen Hülse 5 aufgeschoben werden kann, wobei beide Hülsen 5,9 in Richtung ihrer Längsachse 15 gleich lang sind. Dabei kann auch vorgesehen sein, die Fixierhülse 9 und die elastische Hülse 5, z.B. in einem Spritzgussverfahren, als ein Teil zu fertigen.

Auf einer Außenwandung 11 der Fixierhülse 9 ist ein umlaufender Steg 12 angeordnet, der die Außenwandung 11 in zwei gleichgroße Flächenbereiche 11 a,11 b unterteilt. Weiterhin sind in dieser Ausführungsform in einer Wandung 13 der Fixierhülse 9 axiale Schlitze 14 vorgesehen, die abwechselnd von beiden Stirnflächen der Fixierhülse 9 ausgehend parallel zur Längsachse 15 der Fixierhülse 9 verlaufen. Durch diese Schlitze 14 ist die Wandung 13 der Fixierhülse 9 senkrecht zur Längsachsrichtung 15, d.h. radial nach innen verformbar. Die Schlitze 14 verlaufen dabei von den Stirnflächen ausgehend bis über den Steg 12 hinweg, so dass dieser im Bereich der Schlitze 14 ausgespart ist, wodurch die Fixierhülse 9 auch im Bereich des Stegs 12 radial verformbar wird. Insbesondere wird dadurch eine gleichmäßige radiale Verformbarkeit der Fixierhülse 9 gewährleistet.

Erfindungsgemäß weisen die Flächenbereiche 11a,11b der Außenwandung 11 der Fixierhülse 9 gemäß Fig. 3 bis 5 eine Oberflächenprofilierung 4a auf, was insbesondere in der Stirnansicht gemäß Fig. 4 und 4a deutlich zu sehen ist.

Die Oberflächenprofilierung 4a ist dabei in vier deckungsgleiche Segmente 20-i mit i=1,2,3,4 aufgeteilt, die jeweils einen Winkelbereich von α=90° einschließen. Ein Segment 20-i beginnt in einem Punkt A1-i, bei einem Ausgangsradius r1 der Außenwandung 11. Anschließend steigt der Radius der Außenwandung 11 in einem Winkelbereich von 90° gleichmäßig auf einen Endradius r2 in einem Punkt B1-i an, wodurch eine Keilfläche 25a gebildet wird. Zusätzlich sind auf der Außenwandung 11 zwischen den Punkten A1-i und B1-i in gleichmäßigen Abständen Raststufen 26a angeordnet, wobei die Raststufen 26a eine steile Flanke 27a und ein flache Flanke 28a aufweisen. Am Punkt B1-i fällt die Außenwandung 11 in einer größeren Stufe 23-i wieder auf den Ausgangsradius r1 ab und das nächste Segment i+1 beginnt. Alternativ können auch weniger oder mehr als vier Segmente vorgesehen sein, wodurch sich der Winkelbereich α der Segmente auf 360° geteilt durch die Anzahl i der Segmente ändert.

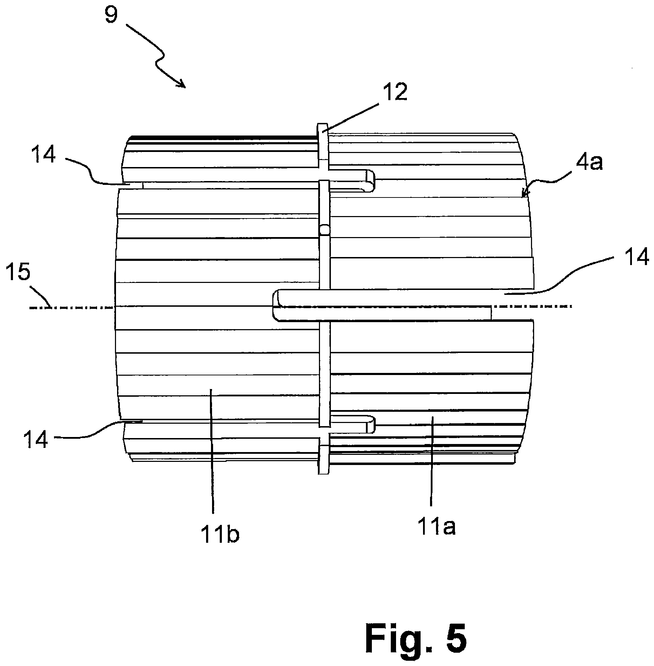

Wie weiterhin in Fig. 3 und 5 zu sehen ist, sind die Flächenbereiche 11 a,11 b gegenläufig profiliert. Während die Keilflächen 25a mit den Raststufen 26a im ersten Flächenbereich 11a in einer Umlaufrichtung ansteigen, fallen sie in der gleichen Umlaufrichtung im zweiten Flächenbereich 11 b ab.

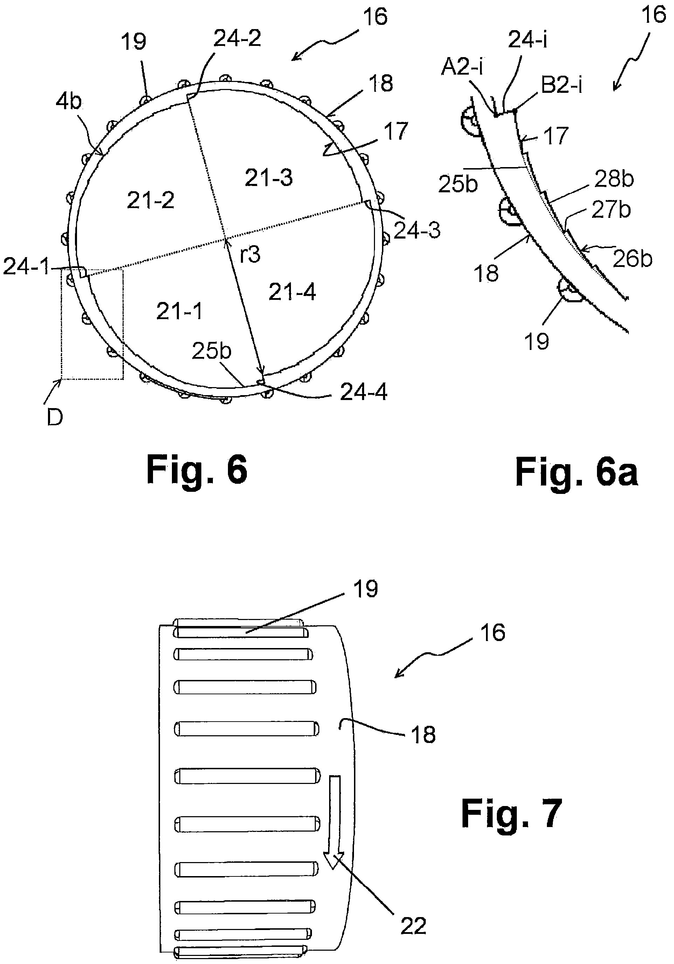

Ein weiteres Teil des Bauteilverbinders 1 ist in den Figuren 6 und 7 gezeigt. Die Figuren stellen einen Spannring 16 in einer Stirnansicht und in einer Seitenansicht dar. Der Spannring 16 ist, wie auch alle anderen Teile 5,9 des Bauteilverbinders 1, hohlzylindrisch ausgeführt. Für den Bauteilverbinder 1 sind zwei dieser Spannringe 16 vorgesehen.

In den Figuren 6 und 6a ist zu sehen, dass eine Innenwandung 17 des Spannrings 16 eine Profilierung 4b aufweist:
In vier Segmenten 21-i mit i=1,2,3,4 sind auf der Innenwandung 17 in gleichmäßigen Abständen Raststufen 26b mit einer steilen Flanke 27b und einer flachen Flanke 28b angeordnet. Gleichzeitig fällt der Radius r3 der Innenwandung 17 gemäß Figur 6 und 6a innerhalb der Segmente zwischen Punkt A2-i und Punkt B2-i ab, wodurch eine Keilfläche 25b gebildet wird. Der Betrag der Steigung der Keilfläche 25b des Spannrings 16 ist dabei gleich dem Betrag der Steigung der Keilfläche 25a der Fixierhülse 9. Anschließend steigt der Radius in einer Stufe 24-i wieder auf seine Ausgangshöhe an und das nächste Segment beginnt.

Weiterhin sind in dieser Ausführungsform auf dem Spannring 16 gemäß Fig. 6 und 7 mehrere Greifmittel 19 auf seiner Außenwandung 18 angeordnet. Diese ermöglichen ein zuverlässiges Greifen und Verdrehen auch unter besonderen Bedingungen, wie bei Betätigung mit Handschuhen oder wenn die Hände oder der Spannring 16 feucht sind. Außerdem wird eine Verdrehung des Spannringes 16 erleichtert, und es kann eine größere Kraft zum Verdrehen auf den Spannring 16 übertragen werden. Ein Pfeil 22 auf der Außenwandung 18 des Spannrings 16 gibt seine Schließrichtung an.

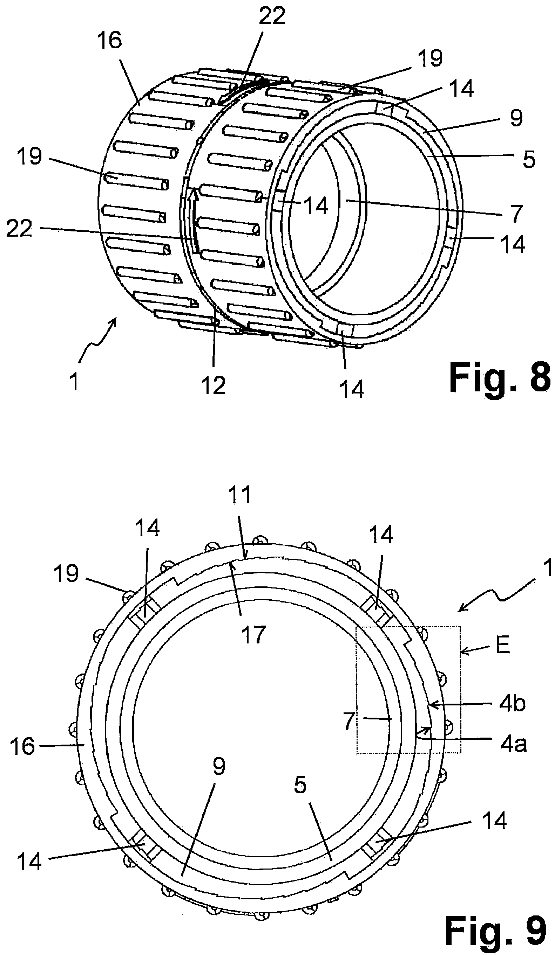

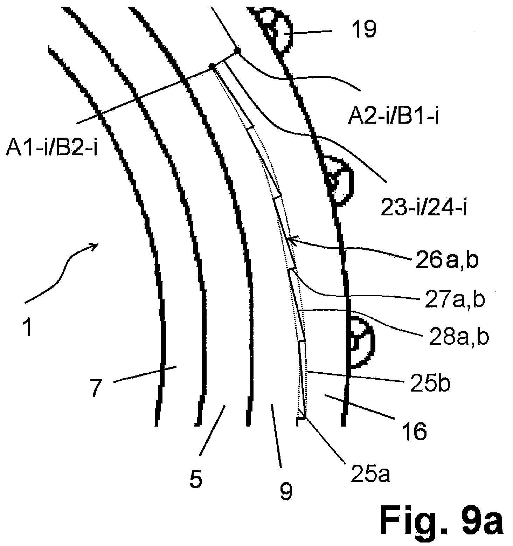

Die Figuren 8 und 9 zeigen den aus der elastischen Hülse 5, der Fixierhülse 9 und den zwei Spannringen 16 bestehenden Bauteilverbinder 1 in einer perspektivischen Ansicht und einer Stirnansicht im zusammengesetzten Zustand. Die beiden Spannringe 16 werden von beiden Seiten auf die Fixierhülse 9, die mit der elastischen Hülse 5 zu einem Bauteil verbunden ist, aufgeschoben. Die Schließrichtung der Spannringe 16 ist dabei gegenläufig.

Beim Aufsetzen der beiden Spannringe 16 ist deshalb darauf zu achten, dass die profilierte Innenwandung 17 des jeweiligen Spannringes 16 passgenau auf den jeweilig gegenläufig profilierten Flächenbereich 11 a, 11 b der Fixierhülse 9 aufgesetzt wird. Dies ist dann der Fall, wenn der jeweilige Spannring 16 relativ zum Flächenbereich 11a,11b der Fixierhülse 9 so verdreht ist, dass sich die Stirnflächen der Stufen 23-i und 24-i berühren und weiterhin die Spannringe 16 so auf der Fixierhülse 9 aufliegen, dass die Keilflächen 25a der Fixierhülse 9 sowie die Keilflächen 25b der Spannringe 16 in derselben Drehrichtung ansteigen. Wie in Figur 9a gezeigt ist, fallen in diesem Zustand die Punkte A2-i mit den Punkten B1-i und gleichzeitig die Punkte A1-i mit den Punkten B2-i zusammen und die flachen Flanken 28a, 28b liegen auf dem gesamten Umfang aufeinander.

Zur Benutzung des Bauteilverbinders 1 werden, wie in Fig. 1 gezeigt, die beiden Rohre 2 und 3 von beiden Seiten in den zusammengesetzten Bauteilverbinder 1 gesteckt, bis die Stirnseiten der Rohre 2,3 den Steg 7 in der elastischen Hülse 5 berühren. Anschließend werden die Spannringe 16 in ihre jeweilige Schließrichtung verdreht. Durch die gegenläufige Profilierung 4a der Flächenbereiche 11a,11b ist die Schließrichtung der Spannringe 16 ebenfalls gegenläufig. Daher müssen die beiden Spannringe 16 zum Schließen des Bauteilverbinders 1 in entgegengesetzte Richtungen verdreht werden, wie es in Figur 8 durch die Pfeile 22 angedeutet ist.

Als Schließrichtung wird dabei die Drehrichtung bezeichnet, in der durch die Verdrehung des jeweiligen Spannringes 16 die Fixierhülse 9 radial nach innen, d.h. senkrecht zur Richtung der Längsachse 15, verformt wird und dadurch die elastische Hülse 5 verspannt und gegen die Rohre 2,3 gedrückt wird. Zu einer Verformung der Fixierhülse 9 kommt es, wenn die Spannringe 16 so auf der Fixierhülse 9 verdreht werden, dass die profilierte Innenwandung 17 der Spannringe 16 gegen die profilierte Außenwandung 11 der Fixierhülse 9 drückt. Dadurch, dass die profilierten Wandungen 11,17 gegeneinander verdreht werden, berühren die Keilflächen 25b auf der Innenwandung 17 der Spannringe 16 mit immer kleiner werdenden Radien Keilflächen 25a der Außenwandung 11 der Fixierhülse 9, deren Radius gleichzeitig immer größer wird. Da die Spannringe 16 nicht radial nach außen deformierbar sind, folgt daraus eine radial nach innen gerichtete Verformung der Fixierhülse 9.

Aufgrund der Raststufen 26a,26b in der Oberflächenprofilierung 4a,4b wird eine Verdrehung entgegen der Schließrichtung blockiert, da die steilen Flanken 27a der Raststufen 26a auf der Außenwandung 11 der Fixierhülse 9 gegen die steilen Flanken 27b der Raststufen 26b auf der Innenwandung 17 des Spannrings 16 drücken, so dass eine Verdrehung nur mit einer sehr hohen Gegenkraft möglich ist, die die Oberflächenprofilierung 4a,4b gleichzeitig beschädigen würde. Dadurch wird gleichzeitig ein ungewolltes selbständiges Lösen im fixierten und abdichtenden Zustand verhindert. Ein gewolltes Lösen des Bauteilverbinders 1 wird durch ein "Überdrehen" der Spannringe 16 erreicht. Dabei wird der Spannring 16 so weit in die Schließrichtung weitergedreht, bis der Ausgangszustand wieder erreicht ist und die elastische Hülse somit nicht mehr an die Rohre 2,3 gedrückt wird; die Rohre 2,3 sind somit nicht mehr fixiert und abgedichtet und können aus dem Bauteilverbinder 1 entfernt werden. Weiterhin kann die Fixierung auch gelöst werden, indem die Spannringe 16 im verspannten Zustand der Fixierhülse 9 in Richtung der Längsachse 15 der Fixierhülse 9 abgezogen werden. Dadurch wird die Verformung der Fixierhülse 9 aufgehoben und die elastische Hülse 5 drückt nicht mehr gegen die Rohre 2,3.

## Patentansprüche

1. Bauteilverbinder (1) zum Verbinden von zylindrischen Bauteilen (2,3), aufweisend:
- eine elastische Hülse (5), die die Bauteile (2,3) im Bereich einer Stoßnaht umschließt;
- eine radial verformbare Fixierhülse (9), die die elastische Hülse (5) umhüllt;
- einen Spannring (16), zur radialen Verformung der Fixierhülse (9), wobei die Fixierhülse (9) eine profilierte Außenwandung (4a, 11) und der Spannring (16) eine gegensätzlich profilierte Innenwandung (4b, 17) derart aufweisen, dass der Spannring (16) konzentrisch auf die Fixierhülse (9) passgenau aufschiebbar ist, und bei einer Relativverdrehung des passgenau aufgesetzten Spannrings (16) in eine Schließrichtung (22) die Fixierhülse (9) durch die Oberflächenprofilierung (4a, 4b) radial nach innen verformbar ist, wobei die elastische Hülse (5) durch eine radiale Verformung der Fixierhülse (9) in senkrechter Richtung zu einer Längsachse (15) der Fixierhülse (9) zur Fixierung und Abdichtung der Stoßnaht und somit der Bauteile (2, 3) verspannbar ist, **dadurch gekennzeichnet, dass** die Außenwandung (11) der Fixierhülse (9) zwei Flächenbereiche (11a, 11b) aufweist, die sich jeweils von der Verbindungsstelle der beiden Bauteile (2, 3) weg erstrecken und gegenläufige Oberflächenprofilierungen (4a) in Form von mindestens zwei in Umfangsrichtung gleichgerichteten Keilflächen (25a) besitzen, wobei jedem Flächenbereich (11a, 11b) ein Spannring (16) zugeordnet ist, dessen Innenwandung (17) mindesten zwei in Umlaufrichtung gleichgerichtete Keilflächen (25b) aufweist, die die gleiche Steigung wie die Keilflächen (25a) der Fixierhülse (9) haben, jedoch gegenläufig angeordnet sind, wobei sich die Keilflächen (25a, 25b) beim Verdrehen der Spannringe (16) auf der Fixierhülse (9) in Schließsichtung unter radialem Druckaufbau auf die zugeordneten Flächenbereiche (11a, 11b) aufeinander schieben, und die erreichte Schließstellung durch auf den Keilflächen (25a, 25b) vorgesehene Raststufen (26a, 26b) arretiert und eine Verdrehung entgegen der Schließrichtung somit verhindert wird.

2. Bauteilverbinder (1) nach Anspruch 1, **dadurch gekennzeichnet, dass** die Flächenbereiche (11a, 11b) auf der Fixierhülse (9) durch einen auf der Außenwandung (11) der Fixierhülse (9) umlaufenden Steg voneinander getrennt sind.

3. Bauteilverbinder (1) nach Anspruch 1 oder 2, **dadurch gekennzeichnet, dass** durch die gegenläufige Profilierung (4a) der Flächenbereiche (11a, 11b) die jeweiligen Spannringe (16) gegenläufige Schließrichtungen besitzen.

4. Bauteilverbinder (1) nach einem der vorhergehenden Ansprüche, **dadurch gekennzeichnet, dass** die Oberflächenprofilierung (4a, 4b) in eine Anzahl deckungsgleicher Segmente (20-i, 21-i) eingeteilt ist, wobei jedes Segment 20-i, 21-i) einen Winkelbereich von 360°/i einschließt und jedem Segment (20-i, 21-i) lediglich eine Keilfläche 25a, 25b zugeordnet ist.

5. Bauteilverbinder (1) nach einem der vorhergehenden Ansprüche, **dadurch gekennzeichnet, dass** ein umlaufender Steg (7) auf der Innenwandung (6) der elastischen Hülse (4) angeordnet ist, um die Stirnflächen der zu verbindenden Bauteile (2, 3) zu separieren.

6. Bauteilverbinder (1) nach einem der vorhergehenden Ansprüche, **dadurch gekennzeichnet, dass** in einer Wandung (13) der Fixierhülse (9) Schlitze (14) parallel zur Längsachse (15) der Fixierhülse (9) angeordnet sind, um eine gleichmäßig radiale Verformung zu erleichtern.

7. Bauteilverbinder nach einem der vorhergehenden Ansprüche, **dadurch gekennzeichnet, dass** die Fixierhülse (9) und die elastische Hülse (5) als ein Bauteil gefertigt sind.

## Claims

1. A component connector (1) for connecting cylindrical components (2, 3), having:
- a resilient sleeve (5) which surrounds the components (2, 3) in the region of a butt seam;
- a radially deformable fixing sleeve (9), which sheathes the resilient sleeve (5);
- a clamping ring (16) for the radial deformation of the fixing sleeve (9),
wherein the fixing sleeve (9) has a profiled outer wall (4a, 11) and the clamping ring (16) has an oppositely profiled inner wall (4b, 17) such that the clamping ring (16) may be pushed concentrically onto the fixing sleeve (9) with a precise fit and, upon a relative rotation of the precisely fitted clamping ring (16) in a closing direction (22), the fixing sleeve (9) is radially inwardly deformable as a result of the surface profiling (4a, 4b), wherein the resilient sleeve (5) may be clamped by a radial deformation of the fixing sleeve (9) in a perpendicular direction to a longitudinal axis (15) of the fixing sleeve (9) for the purpose of fixing and sealing the butt seam and therefore the components (2, 3), **characterised in that** the outer wall (11) of the fixing sleeve (9) has two surface regions (11a, 11b), which each extend away from the connecting point of the two components (2, 3) and have opposing surface profiles (4a) in the form of at least two wedge faces (25a) aligned in the circumferential direction,
wherein a clamping ring (16) is associated with each surface region (11a, 11b), the inner wall (17) of which clamping ring has at least two wedge faces (25b) which are aligned in the circumferential direction and have the same pitch as the wedge faces (25a) of the fixing sleeve (9) but are arranged in the opposite direction, wherein, upon a rotation of the clamping rings (16) on the fixing sleeve (9) in the closing direction, the wedge faces (25a, 25b) slide towards one another under a radial build up of pressure on the associated surface regions (11a, 11b) and the closed position achieved is locked by latching steps (26a, 26b) provided on the wedge faces (25a, 25b) and a rotation in opposition to the closing direction is therefore prevented.

2. A component connector (1) according to Claim 1, **characterised in that** the surface regions (11a, 11b) on the fixing sleeve (9) are separated from one another by a circumferential web on the outer wall (11) of the fixing sleeve (9).

3. A component connector (1) according to Claim 1 or 2, **characterised in that** the respective clamping rings (16) have opposing closing directions as a result of the opposing profiling (4a) of the surface regions (11a, 11b).

4. A component connector (1) according to one of the preceding claims, **characterised in that** the surface profile (4a, 4b) is divided into a number of congruent segments (20-i, 21-i), wherein each segment (20-i, 21-i) encompasses an angular range of 360°/i and only one wedge face 25a, 25b is associated with each segment (20-i, 21-i).

5. A component connector (1) according to one of the preceding claims, **characterised in that** a circumferential web (7) is arranged on the inner wall (6) of the resilient sleeve (4) in order to separate the end faces of the components (2, 3) to be connected.

6. A component connector (1) according to one of the preceding claims, **characterised in that** slots (14) are arranged in a wall (13) of the fixing sleeve (9), parallel to the longitudinal axis (15) of the fixing sleeve (9), in order to facilitate a uniform radial deformation.

7. A component connector according to one of the preceding claims, **characterised in that** the fixing sleeve (9) and the resilient sleeve (5) are manufactured as one component.

## Revendications

1. Raccord d'assemblage de pièces (1) pour assembler des pièces cylindriques (2, 3), présentant:
- une douille élastique (5) qui entoure les pièces (2, 3) dans la région d'une soudure bord à bord,
- une douille de fixation (9) radialement déformable qui enveloppe la douille élastique (5),
- un anneau tendeur (16) pour la déformation radiale de la douille de fixation (9), la douille de fixation (9) présentant une paroi extérieure (4a, 11) profilée et l'anneau tendeur (16) présentant une paroi intérieure (4b, 17) de profilage opposé de telle façon que l'anneau tendeur (16) puisse être enfiché en ajustement précis et de manière concentrique sur la douille de fixation (9) et lors d'une rotation relative de l'anneau tendeur (16) dans une direction de fermeture (22), l'anneau tendeur étant enfiché en ajustement précis, la douille de fixation peut être déformée radialement vers l'intérieur par le profilage superficiel (4a, 4b), ce qui permet un serrage de la douille élastique (5) par une déformation radiale de la douille de fixation (9) dans la direction perpendiculaire à un axe longitudinal (15) de la douille de fixation (9) pour assurer la fixation et l'étanchéité de la soudure bord à bord, c'est-à-dire des pièces (2, 3), **caractérisé en ce que** la paroi extérieure (11) de la douille de fixation (9) présente deux zones de surface (11a, 11b), qui s'étendent respectivement depuis la jonction des deux pièces (2, 3) et possèdent des profilages superficiels (4a) de sens opposés en forme d'au moins deux faces en coin (25a) dirigées dans la même direction circonférentielle, à chaque zone de surface (11a, 11b) étant associé un anneau tendeur (16), dont la paroi intérieure (17) présente au moins deux faces en coin (25b) dirigées dans la même direction circonférentielle, faces en coin qui présentent la même inclinaison que les faces en coin (25a) de la douille de fixation (9), mais qui sont disposées dans des sens opposés, les faces en coin (25a, 25b) s'enfichant les unes sur les autres, lors d'une rotation des anneaux tendeurs (16) sur la douille de fixation (9) dans la direction de fermeture, tout en établissant une pression radiale sur les zones de surface (11a, 11 b) associées et **caractérisé en ce que** la position de fermeture atteinte est bloquée par des crans (26a, 26b) prévus sur les faces en coin (25a, 25b) empêchant toute rotation dans la direction opposée à la direction de fermeture.

2. Raccord d'assemblage de pièces (1) suivant la revendication 1, **caractérisé en ce que** les zones de surface (11a, 11b) sur la douille de fixation (9) sont séparées l'une de l'autre par une nervure périphérique sur la paroi extérieure (11) de la douille de fixation (9).

3. Raccord d'assemblage de pièces (1) suivant la revendication 1 ou 2, **caractérisé en ce que** le profilage dans des sens opposés (4a) des zones de surface (11a, 11 b) a pour effet que les anneaux tendeurs (16) respectifs possèdent des directions de fermeture opposées.

4. Raccord d'assemblage de pièces (1) suivant une des revendications précédentes, **caractérisé en ce que** le profilage de surface (4a, 4b) est divisé en plusieurs segments coïncidents (20-i, 21-i), chaque segment (20-i, 21-i) enfermant une plage angulaire de 360°/i et à chaque segment (20-i, 21-i) étant seulement associé une face en coin 25a, 25b).

5. Raccord d'assemblage de pièces (1) suivant une des revendications précédentes, **caractérisé en ce qu'**une nervure périphérique (7) est disposée sur la paroi intérieure (6) de la douille élastique (4) pour séparer les faces frontales des pièces à assembler (2, 3).

6. Raccord d'assemblage de pièces (1) suivant une des revendications précédentes, **caractérisé en ce que** des fentes (14) sont disposées de façon parallèle dans une paroi (13) de la douille de fixation (9) afin de faciliter une déformation radiale uniforme.

7. Raccord d'assemblage de pièces suivant une des revendications précédentes, **caractérisé en ce que** la douille de fixation (9) et la douille élastique (5) sont réalisées sous forme d'une pièce unique.
